# EUROPÄISCHE PATENTSCHRIFT

(11) **EP 1 284 370 B1**
(45) Veröffentlichungstag und Bekanntmachung des Hinweises auf die Patenterteilung: **10.02.2010**
(21) Anmeldenummer: 02405573.3
(22) Anmeldetag: 08.07.2002
(51) Int. Cl.: F04D 15/00

(54) **Verfahren und Pumpvorrichtung zum Erzeugen eines einstellbaren, im wesentlichen konstanten Volumenstroms**
Method for delivering variable amounts of flow, and dosing pump using this method
Méthode pour délivrer des débits variables, et pompe utilisant cette méthode

(30) Priorität: 16.08.2001 EP 01810790
(43) Veröffentlichungstag der Anmeldung: 19.02.2003
(73) Patentinhaber: Levitronix LLC, Waltham, MA 02451 (US)
(72) Erfinder: Schöb, Reto Dr., 8964 Rudolfstetten (CH)
(74) Vertreter: Sulzer Management AG

(56) Entgegenhaltungen:
- DE-A- 4 243 118
- US-A- 5 307 288
- US-A- 6 149 508
- US-B1- 6 241 485
- PATENT ABSTRACTS OF JAPAN vol. 1997, no. 09, 30. September 1997 (1997-09-30) & JP 09 137792 A (NEC CORP), 27. Mai 1997 (1997-05-27)

## Beschreibung

Die Erfindung betrifft ein Verfahren und eine Pumpvorrichtung zum Erzeugen eines einstellbaren, im wesentlichen konstanten Volumenstroms eines Fluids gemäss dem Oberbegriff des unabhängigen Anspruchs der jeweiligen Kategorie, sowie die Verwendung dieses Verfahrens.

In vielen industriellen Prozessen und bei zahlreichen Verfahrensführungen besteht die Notwendigkeit, ein Fluid dosiert zu fördern, das heisst es soll ein im wesentlichen konstanter Volumenstrom des Fluids gefördert werden, in dem Sinne, dass die pro Zeit geförderte Fluidmenge konstant ist. Als ein Beispiel seien hier chemisch-mechanische Polierprozesse (CMP, chemical-mechanical polishing) genannt, wie sie in der Halbleiterindustrie eingesetzt werden. Bei solchen Prozessen wird eine üblicherweise als Slurry bezeichnete Suspension aus typischerweise sehr feinen Feststoffpartikeln und einer Flüssigkeit auf einen rotierenden Wafer aufgebracht und dient dort zum Polieren bzw. Läppen der sehr feinen Halbleiterstrukturen. Hierbei ist es notwendig, dass die Suspension (Slurry) mit einem konstanten, einstellbaren Volumenstrom, also dosierbar, auf die Wafer-Oberfläche aufgebracht wird.

Bei anderen Prozessen, beispielsweise dem Aufbringen von Fotolack auf den Wafer, ist es notwendig, eine abgemessene Fluidmenge zu fördern, was in der Regel durch die Förderung eines konstanten Volumenstroms über eine vorgebbare Zeit realisierbar ist.

Für solche dosierten Förderungen werden heutzutage volumetrische Pumpen eingesetzt wie beispielsweise peristaltische Pumpen, Zahnradpumpen, Kolbenpumpen, Membranpumpen. Solche volumetrischen Pumpen haben die Eigenschaft, dass sie pro Arbeitszyklus eine wohldefinierte Fluidmenge fördern. Bei einer Kolbenpumpe ist zum Beispiel das pro Hub geförderte Fluidvolumen festgelegt durch die Kolbenfläche und den Kolbenhub. Somit lässt sich ein konstanter Volumenstrom generieren, weil mit jedem Hub des Kolbens das gleiche Fluidvolumen gefördert wird.

Volumetrische Pumpen haben aber Eigenschaften, die sich bei einigen Anwendungen als nachteilhaft erweisen können, beispielsweise generieren sie im allgemeinen pulsierende Fluidströme. Die damit verbundenen Druckschwankungen können sich als sehr störend erweisen. Sie können auch Ablagerungen oder Verklumpungen von Partikeln begünstigen. Zudem können bei speziellen Flüssigkeiten, wie beispielsweise bei den bereits erwähnten Slurry-Suspensionen, die Feststoffteilchen durch Abrieb zu erheblichen Beschädigungen der Pumpe, insbesondere der dichtenden Komponenten zwischen zwischen Saug- und Druckseite, führen. So können durch die abrasiven Partikel z. B. in einer Kolbenpumpe Leckagen entlang des Kolbens auftreten, weil die Kolbenringe und/oder die Zylinderwand beschädigt werden.

Die Aufgabe der Erfindung ist es, eine anderes Verfahren und eine Vorrichtung vorzuschlagen, mit welchen ein einstellbarer, im wesentlichen konstanter Volumenstrom eines Fluids erzeugbar ist. Das Verfahren soll apparativ möglichst einfach realisierbar sein und insbesondere auch für die Förderung von Suspensionen, z. B. Slurry, geeignet sein.

Die diese Aufgabe in apparativer und verfahrenstechnischer Hinsicht lösenden Gegenstände der Erfindung sind durch die Merkmale der unabhängigen Ansprüche der jeweiligen Kategorie gekennzeichnet.

Erfindungsgemäss wird also ein Verfahren zum Erzeugen eines einstellbaren, im wesentlichen konstanten Volumenstroms eines Fluids mittels einer Pumpvorrichtung vorgeschlagen, bei welchem das Fluid von der Pumpvorrichtung aus einem Vorratsbehälter in eine Stömungsverbindung gefördert wird. Als Pumpvorrichtung wird eine Rotationspumpe verwendet, und die Rotationspumpe wird mit einem Wirkungsgrad betrieben, der kleiner ist als die Hälfte des maximalen Wirkungsgrads der Rotationspumpe. Vorzugsweise wird die Rotationspumpe mit höchstens zwanzig Prozent ihres maximalen Wirkungsgrads betrieben.

Wesentlich für die Erfindung ist die Erkenntnis, dass bei solchen Betriebszuständen der Rotationspumpe, die einem sehr geringen Wirkungsgrad entsprechen, ein ein-eindeutiger Zusammenhang zwischen der Drehzahl der Pumpe, genauer gesagt, der Drehzahl des Pumpenrotors, und dem von der Pumpe geförderten Volumenstrom besteht. Somit kann in diesem Betriebsbereich direkt über die Drehzahl des Pumpenrotors ein konstanter Volumenstrom des Fluids eingestellt werden, ohne dass dafür Sensoren zur Erfassung des Volumenstroms und Regelkreise für die Rotationspumpe notwendig sind. Daher lässt sich das erfindungsgemässe Verfahren apparativ sehr einfach realisieren. Der gewünschte Volumenfluss wir in einfacher Weise über die Drehzahl der Rotationspumpe gesteuert und eingestellt.

Der von der Rotationspumpe generierte Volumenstrom ist aufgrund des Funktionsprinzips einer Rotationspumpe frei von Pulsationen, wodurch auch die Gefahr von unerwünschten Ablagerungen deutlich reduziert wird.

Ferner ist bei einer Rotationspumpe der Eingang ständig in Strömungsverbindung mit dem Ausgang der Pumpe. Es gibt keine Membrane, Kolben oder ähnliche Bauteile, welche den Ausgang gegenüber dem Eingang abdichten können. Dies reduziert die Gefahr von Beschädigungen der Pumpe bei der Förderung abrasiver Partikel.

Zudem kann ein Rotationspumpe auch bei verschlossenem Ausgang, das heisst mit einem geförderten Volumenstrom von Null arbeiten, ohne Schaden zu nehmen. Dadurch besteht die Möglichkeit den konstanten Volumenstrom durch ein der Pumpe nachgeschaltetes Ein/Aus-Ventil zeitlich zu begrenzen bzw. zu unterbrechen. Folglich ist mit dem erfindungsgemässen Verfahren auch die dosierte Abgabe einer vorbestimmten Fluidmenge möglich, ohne dass dafür aufwändige Regelmechanismen für die Förderleistung der Pumpe vonnöten sind.

Besonders vorteilhaft ist es, wenn das Fluid durch die Strömungsverbindung zu einer Abgabevorrichtung gefördert wird, wobei der gesamte Strömungswiderstand der Strömungsverbindung und der Abgabevorrichtung so gewählt wird, dass sein mittlerer Wert wesentlich grösser - das heisst mindestens doppelt so gross - ist, als die Schwankungen des Strömungswiderstands während des Betriebs. Dann kann nämlich beispielsweise der Strömungswiderstand der Abgabevorrichtung (Lastwiderstand) variieren, ohne dass sich dadurch der Fluss, das heisst der von der Pumpe geförderte Volumenstrom, ändert.

Das Verfahren, eine Rotationspumpe mit einem Wirkungsgrad zu betreiben, der kleiner ist als die Hälfte des maximalen Wirkungsgrads der Rotationspumpe, lässt sich vorteilhaft auch zum Bestimmen der Viskosität und insbesondere der dynamischen Viskosität eines Fluids verwenden. Diese Anwendung der Rotationspumpe ist unabhängig davon, ob die Pumpe zum Erzeugen eines konstanten Volumenstroms eingesetzt wird oder nicht.

Das erfindungsgemässe Verfahren kann bevorzugt zum Fördern von Suspensionen, insbesondere zum Fördern von Slurry speziell in einem CMP-Prozess, verwendet werden.

Die erfindungsgemässe Pumpvorrichtung ist dadurch gekennzeichnet, dass sie als Rotationspumpe ausgestaltet ist.

Weitere vorteilhafte Massnahmen und Verfahrensführungen ergeben sich aus den abhängigen Ansprüchen.

Im Folgenden wird die Erfindung in apparativer und verfahrenstechnischer Hinsicht anhand von Ausführungsbeispielen und anhand der Zeichnung näher erläutert. In der schematischen Zeichnung zeigen:
- Fig. 1:: eine Darstellung des Zusammenhangs zwischen Druck (oben) bzw. Wirkungsgrad (unten) und Durchfluss in einer Rotationspumpe,
- Fig. 2:: eine Darstellung des Zusammenhangs zwischen Durchfluss (durchgezogen) bzw. Druck (gestrichelt) und Drehzahl für ein Ausführungsbeispiel des erfindungsgemässen Verfahrens,
- Fig. 3:: eine Darstellung des Zusammenhangs zwischen dem Motorstrom und der Drehzahl der Rotationspumpe für ein Ausführungsbeispiel des erfindungsgemässen Verfahrens,
- Fig. 4:: eine schematische Darstellung einer Anordnung zur Durchführung eines Ausführungsbeispiels des erfindungsgemässen Verfahrens, und
- Fig. 5-8:: Varianten der in Fig. 4 dargestellten Anordnung.

Das erfindungsgemässe Verfahren zum Erzeugen eines einstellbaren, im wesentlichen konstanten Volumenstroms eines Fluids ist insbesondere dadurch gekennzeichnet, dass eine Rotationspumpe verwendet wird und diese mit einem Wirkungsgrad betrieben wird, der kleiner ist als die Hälfte des maximalen Wirkungsgrads der Rotationspumpe. Vorzugsweise beträgt er höchstens zwanzig Prozent des maximalen Wirkungsgrads.

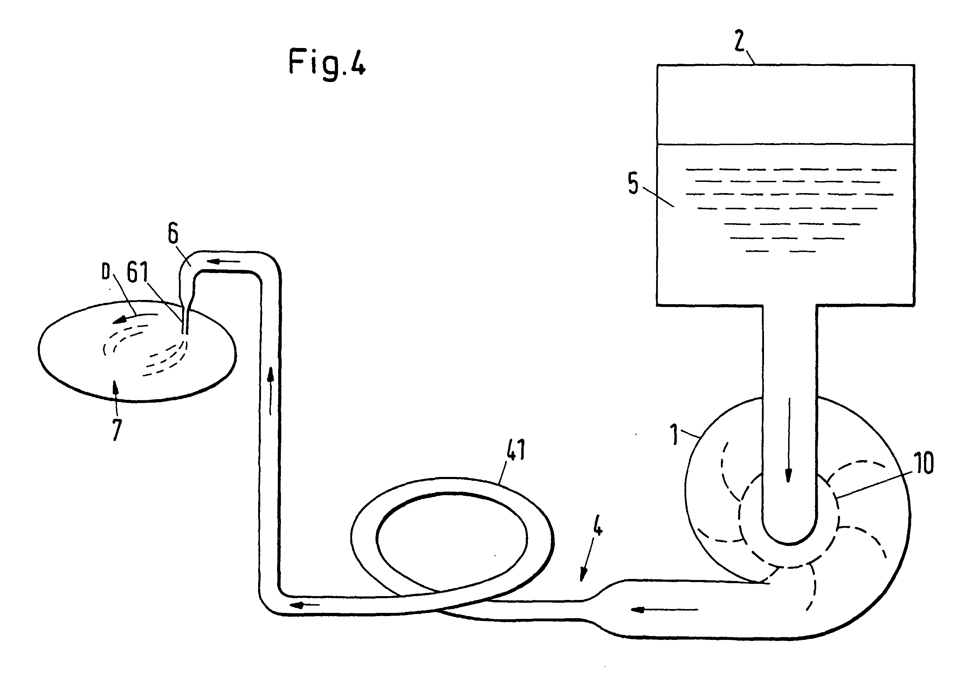

Fig. 4 zeigt in einer schematischen Darstellung eine Anordnung zur Durchführung eines Ausführungsbeispiels des erfindungsgemässen Verfahrens. Der Eingang einer Rotationspumpe 1, die hier als Zentrifugalpumpe ausgestaltet ist und einen Rotor 10 aufweist, ist mit einem Vorratsbehälter 2 verbunden, in welchem sich das zu fördernde Fluid 5 befindet. Der Ausgang der Rotationspumpe 1 ist über eine Strömungsverbindung 4 mit einer Abgabevorrichtung 6 verbunden, die hier mit einer Düse 61 versehen ist.

Im Folgenden wird beispielhaft auf eine für die Praxis besonders wichtige Verwendung Bezug genommen, nämlich, dass das erfindungsgemässe Verfahren im Rahmen eines CMP-Prozesses (CMP: chemical-mechanical polishing) in der Halbleiterindustrie eingesetzt wird. Bei diesen Prozessen wird eine als Slurry bezeichnete Suspension von feinen Festkörperteilchen in einer Flüssigkeit auf einen rotierenden Wafer 7 aufgebracht und dient dort zum Läppen bzw. Polieren der sehr feinen Halbleiterstrukturen. Die Rotation des Wafers 7 ist in Fig. 4 durch den Pfeil D angedeutet. Das zu fördernde Fluid ist in diesem Beispiel die als Slurry bezeichnete Suspension.

Mit Rotationspumpen, die auch als Kreiselpumpen bezeichnet werden, sind alle diejenigen Pumpvorrichtungen gemeint, die einen Rotor bzw. ein Flügelrad aufweisen, durch dessen Rotation ein Impulsübertrag auf das zu fördernde Fluid erfolgt. Der Begriff Rotationspumpe umfasst insbesondere Zentrifugalpumpen, Axialpumpen und Seitenkanalpumpen. Typischerweise stehen bei einer Rotationspumpe der Eingang und der Ausgang in ständiger Strömungsverbindung. Es sind also beispielsweise keine Membrane zwischen Eingang und Ausgang vorgesehen.

Insbesondere für solche Fluide, die Festkörperpartikel enthalten oder die hochrein sind, hat die Rotationspumpe vorzugsweise einen vollständig magnetisch gelagerten Rotor. Die Abwesenheit mechanischer Lager für den Rotor hat mehrere Vorteile. So wird das Problem vermieden, dass abrasive Partikel mechanische Lager beschädigen können. Ferner besteht keine Gefahr der Verunreinigung des Fluids durch Schmiermittel oder Lagerabrieb.

Eine besonders bevorzugte Rotationspumpe wird z. B. in der EP-A-0 819 330 bzw. der US-A-6,100,618 offenbart. Diese Rotationspumpe weist einen sogenannten Integralrotor 10 auf und ist als lagerloser Motor ausgestaltet. Mit dem Begriff Integralrotor ist dabei gemeint, dass der Pumpenrotor und der Rotor des die Pumpe antreibenden Motors identisch sind. Der Rotor fungiert sowohl als Rotor des motorischen Antriebs als auch als Rotor der Pumpe. Mit dem Begriff lagerloser Motor ist gemeint, dass der Rotor vollkommen magnetisch gelagert ist, wobei keine separaten Magnetlager vorgesehen sind. Der Stator ist sowohl Stator des elektrischen Antriebs als auch Stator der magnetischen Lagerung und umfasst eine Antriebswicklung der Polpaarzahl p sowie eine Steuerwicklung der Polpaarzahl p±1. Damit ist es möglich den Rotor sowohl anzutreiben als auch vollkommen berührungslos magnetisch im Stator zu lagern. Bezüglich weiterer Details einer solchen Rotationspumpe sei hier auf die bereits zitierten Dokumente verwiesen.

Außerdem sind die Merkmale der Präambel des Anspruchs 1 von US-A-5,307,288 bekannt, das als nächstliegende Dokument genannt ist.

Mit dem Begriff Wirkungsgrad ist im Rahmen dieser Ausführungen der hydraulische Wirkungsgrad der Rotationspumpe gemeint, das heisst das Verhältnis aus hydraulischer Leistung (Förderleistung) der Pumpe und mechanischer Leistung für den Antrieb des Rotors (ohne gegebenenfalls vorhandene Reibungsverluste in Lagern oder ähnliches).

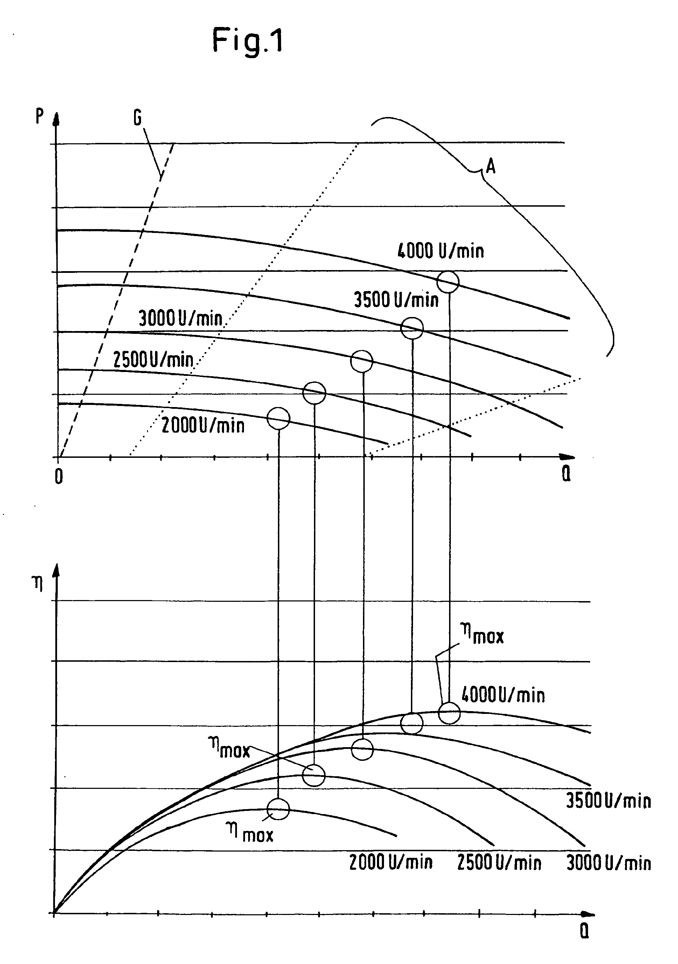

Fig. 1 zeigt im oberen Teil eine Darstellung des Zusammenhangs zwischen Druck p (Ordinate) und Durchfluss oder Volumenstrom Q (Abszisse) wie er typisch für eine an sich bekannte Rotationspumpe 1 ist. Die verschiedenen Kurven, die als Druck-Durchfluss-Kennlinien oder als Drosselkurven der Rotationspumpe 1 bezeichnet werden, entsprechen unterschiedlichen Drehzahlen ω der Pumpe, so wie sie in Fig. 1 in Umdrehungen pro Minute (U/min) angegeben sind. Im unteren Teil der Fig. 1 ist bei gleicher Abszisse auf der Ordinate der Wirkungsgrad η abgetragen. Es ist zu erkennen, dass für jede Drehzahl ω der Rotationspumpe ein maximaler Wirkungsgrad ηₘₐₓ existiert. Die Lage des Maximums ist dabei von der Drehzahl abhängig und in Fig. 1 (unten) jeweils durch den Kreis angedeutet.

Rotationspumpen, insbesondere Zentrifugalpumpen, werden überlicherweise dort eingesetzt, wo es auf hohe Pumpmengen ankommt, also auf eine Maximierung der Förderleistung. Daher werden solche Pumpen in dem Bereich betrieben, in dem der hydraulische Wirkungsgrad maximal ist. Dieser Bereich ist in Fig. 1 oben, mit A bezeichnet und wird durch die beiden punktierten Geraden begrenzt. In diesem Betriebsbereich ist es nicht möglich, den Durchfluss ausreichend genau zu bestimmen, ohne dass mit geeigneten Sensoren entsprechende Messungen durchgeführt werden.

Wesentlich für das erfindungsgemässe Verfahren ist die Erkenntnis, dass für solche Betriebsbereiche der Rotationspumpe 1, in denen der Wirkungsgrad deutlich unter dem maximalen Wirkungsgrad liegt, ein ein-eindeutiger Zusammenhang zwischen der Drehzahl des Pumpenrotors und dem geförderten Volumenstrom existiert. In diesen Betriebsbereichen, die in Fig. 1 (oben) links der gestrichelt eingezeichneten Geraden G liegen, kann die Rotationspumpe 1 in einfacher Weise als Dosierpumpe zum Erzeugen eines einstellbaren, im wesentlichen konstanten Volumenstroms eingesetzt werden, ohne dass hierfür aufwendige Regelungen der Fördermenge und die zugehörigen Sensoren notwendig sind.

Dadurch, dass bei diesen Betriebszuständen mit sehr geringem Wirkungsgrad ein ein-eindeutiger Zusammenhang zwischen der Drehzahl der Rotationspumpe 1 und dem Volumenstrom (Fluss) des Fluids existiert, kann der von der Rotationspumpe geförderte Volumenfluss direkt über eine Steuerung der Drehzahl auf den gewünschten Wert eingestellt werden. Somit kann die Rotationspumpe als Dosierpumpe eingesetzt werden.

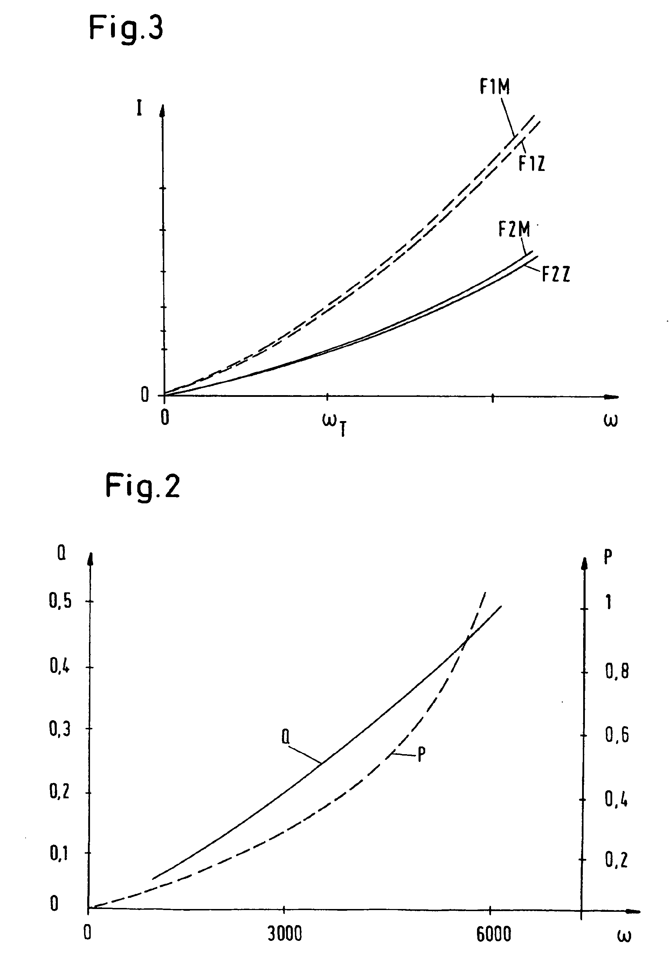

Der ein-eindeutige Zusammenhang zwischen dem Durchfluss (Volumenstrom) Q und der Drehzahl ω der Rotationspumpe ist in Fig. 2 für einen solchen Betriebsbereich dargestellt, in dem die Rotationspumpe mit einem sehr kleinen Wirkungsgrad arbeitet. Die Abhängikeit des Durchflusses Q von der Drehzahl ω ist in Fig. 2 mittels der durchgezogenen Kurve dargestellt. Ebenfalls eingezeichnet in Fig 2 ist mittels der gestrichelten Linie die Abhängigkeit des Drucks p, genauer gesagt der Förderhöhe, von der Drehzahl ω. Auch zwischen diesen beiden Grössen existiert ein ein-eindeutiger Zusammenhang.

Beide in Fig. 2 dargestellten Abhängigkeiten sind in der Regel nicht linear, können aber in einer Kalibrierungsmessung ermittelt werden. Vorzugsweise wird der Volumenstrom des zu fördernden Fluids nur durch die Drehzahl der Rotationspumpe eingestellt. Dazu wird vorab eine Kalibrierungsmessung durchgeführt, um die in Fig. 2 durchgezogen dargestellte Durchfluss-Drehzahl-Kurve zu ermitteln. Diese Kurve kann dann als mathematische Funktion, z. B. eine Polynomapproximation, oder als elektronische Nachschlag-Tabelle (look-up table) in einem Speicher abgelegt werden. Während des Betriebs der Rotationspumpe wird dann für den gewünschten, im wesentlichen konstanten Volumenstrom die zugehörige Drehzahl in der Nachschlag-Tabelle nachgeschaut. Durch Einstellen der entsprechenden Drehzahl kann dann der gewünschte konstante Volumenstrom realisiert werden.

Der eindeutige Zusammenhang zwischen Drehzahl und Volumenfluss hängt von dem zu fördernden Fluid, insbesondere von seiner Viskosität ab, die bekanntlich ein Mass für die innere Reibung in dem Fluid ist. Die Rotationspumpe in solchen Betriebsbereichen zu betreiben, in denen sie mit einem sehr kleinen Wirkungsgrad arbeitet, vorzugsweise mit höchstens zwanzig Prozent ihres maximalen Wirkungsgrads ηmax, ermöglicht es, die Viskosität des zu fördernden Fluids auf einfache Weise zu ermitteln. Dies wird im Folgenden anhand von Fig. 3 erläutert.

Fig. 3 zeigt eine Darstellung des Motorstroms I in Abhängigkeit von der Drehzahl ω der Pumpe für zwei Fluide unterschiedlicher Viskosität für einen Betriebszustand der Rotationspumpe 1, in welchem ihr Wirkungsgrad sehr klein ist. Die gestrichelten, mit F1M und F1Z bezeichneten Kurven beziehen sich auf ein Fluid mit hoher Viskosität, die durchgezogenen, mit F2M und F2Z bezeichneten Kurven beziehen sich auf ein Fluid mit tieferer Viskosität. Die jeweils obere der beiden Kurven, nämlich die mit F1M bzw. F2M bezeichnete Kurve, gilt für den maximal mit der Pumpe bei diesem Betriebszustand generierbaren Fluss (Volumenstrom), die jeweils untere der beiden Kurven, nämlich die mit F1Z bzw. F2Z bezeichnete Kurve, gilt für den Fall, dass gar kein Fluss (Volumenstrom hat den konstanten Wert Null) generiert wird. Die weiter unten noch näher erläuterte grösse Motorstrom I, die auf der Ordinate abgetragen ist, ist direkt ein Mass für das Drehmoment, mit welchem der Rotor bzw. das Flügelrad angetrieben wird. Insbesondere im Falle der bevorzugten Ausgestaltung der Rotationspumpe als lagerloser Motor ist aufgrund der magnetischen Lagerung des Rotors keine mechanische Lagerreibung vorhanden, sodass das Drehmoment, mit welchem der Rotor angetrieben wird, in sehr guter Näherung mit dem auf das Fluid übertragenen Drehmoment übereinstimmt.

Aufgrund des sehr geringen Wirkungsgrads, mit welchem die Rotationspumpe 1 in dem Fig. 3 zugrundeliegenden Betriebszustand betrieben wird, wird praktisch das gesamte Drehmoment und damit die mechanische Leistung, die das Flügelrad bzw. der Rotor auf das Fluid überträgt, in Flüssigkeitsreibungsverluste umgewandelt. Dies ist in Fig. 3 insbesondere auch daraus ersichtlich, dass sich die Kurven für maximalen Fluss F1M und F2M fast nicht von den zugehörigen Kurven für den Fluss Null F1Z und F2Z unterscheiden. Somit ist das Drehmoment des Flügelrads direkt ein Mass für die Viskosität, genauer gesagt die dynamische Viskosität des Fluids, denn die mechanische Leistung des Rotors wird fast vollständig in Reibungsverluste der Flüssigkeit umgewandelt.

Wie bereits erwähnt, entspricht das Drehmoment, welches der Rotor auf die Flüssigkeit überträgt, im wesentlichen, das heisst bis auf mechanische Reibungsverluste, dem Antriebsdrehmoment, mit dem der Rotor angetrieben wird. Dies trifft insbesondere für magnetisch gelagerte Rotoren zu. Das Antriebsdrehmoment wiederum ist durch den in Fig. 3 auf der Ordinate aufgetragenen Motorstrom gegeben, welcher den Rotor antreibt. Mit dem Motorstrom ist dabei der auch als Ankerstrom bezeichnete drehmomentbildende Anteil des Stroms in dem elektrischen Antrieb gemeint. Insbesondere in feldorientierten Drehstrommotoren und auch in Gleichstrommotoren ist der Ankerstrom ein sehr gutes Mass für das Drehmoment, mit welchem der Rotor angetrieben wird.

Somit existiert in dem Betriebsbereich, welcher der Darstellung in Fig. 3 zugrundeliegt, also ein Betriebsbereich, in dem die Rotationspumpe nur mit einem Bruchteil ihres maximalen Wirkungsgrads arbeitet, ein direkter Zusammenhang zwischen dem Motorstrom, mit dem die Pumpe angetrieben wird, und der Viskosität des Fluids. Durch eine Messung des Motorstroms kann somit die dynamische Viskosität des zu fördernden Fluids in einfacher Weise und online bestimmt werden. Vorzugsweise wird zur Bestimmung der Viskosität eine feste Testdrehzahl ω_{T} des Rotors eingestellt und der Motorstrom bei dieser Testdrehzahl ω_{T} bestimmt. Aus dem so ermittelten Motorstrom ist dann die Viskosität des Fluids bekannt, z. B. durch Vergleich mit Eichmessungen und/oder aufgrunf von Berechnungen. Eine besonders genaue Bestimmung der Viskosität lässt sich realisieren, indem der Ausgang der Rotationspumpe verschlossen wird, das heisst der konstante Volumenstrom Null eingestellt wird. Die Kurven F1Z und F2Z in Fig. 3 entsprechen solchen Zuständen, bei denen die gesamte mechanische Leistung des Flügelrads bzw. des Rotors in Flüssigkeitsreibung umgewandelt wird.

Dieses einfache Verfahren zur Bestimmung der Viskosität eines Fluids kann natürlich auch für andere Anwendungen eingesetzt werden als im Zusammenhang mit der Förderung eines einstellbaren, im wesentlichen konstanten Volumenstroms.

Der in Fig. 2 dargestellte Zusammenhang zwischen Volumenfluss und Drehzahl wird für verschiedene Viskositäten ermittelt und in Form von typischerweise elektronischen Nachschlagtabellen (look-up-tables) oder mittels mathematischer Approximationen gespeichert. Wird nun mit der Rotationspumpe 1 ein bestimmtes Fluid gefördert, so wird (falls seine Viskosität nicht schon bekannt ist) zunächst bei der gegebenen Testdrehzahl ω_{T} (siehe Fig. 3) die Viskosität des Fluids bestimmt. Anschliessend wird dann der zu dieser Viskosität gehörende ein-eindeutige Zusammenhang zwischen Volumenfluss und Drehzahl (siehe Fig. 2) gewählt und über die Steuerung der Drehzahl des Rotors bzw. des Flügelrads der jeweils gewünschte konstante Volumenstrom des zu fördernden Fluids eingestellt.

Eine weitere vorteilhafte Massnahme besteht darin, den Strömungswiderstand der Strömungsverbindung 4 (siehe Fig. 4) so auszugestalten, dass der Druckabfall über den gesamten Strömungswiderstand, der sich aus dem Strömungswiderstand der Strömungsverbindung 4 und dem als Lastwiderstand bezeichneten Strömungswiderstand der Abgabevorrichtung 6 zusammensetzt, wesentlich grösser ist als mögliche Druckschwankungen an der Abgabevorrichtung 6. Der gesamte Strömungswiderstand der Strömungsverbindung 4 und der Abgabevorrichtung 6 wird vorteilhaft so gewählt, dass sein mittlerer Wert wesentlich grösser ist als die Schwankungen des Strömungswiderstands während des Betriebs. Mit "wesentlich grösser" ist "mindestens doppelt so gross" gemeint.

Änderungen des Lastwiderstands bzw. des gesamten Strömungswiderstands der Strömungsverbindung 4 und der Abgabevorrichtung 6 können beispielsweise dadurch verursacht werden, das sich ein Filter während des Betriebs mit der Zeit langsam zusetzt.

Druckschwankungen an der Abgabevorrichtung 6 können beispielsweise durch Änderungen der Förderhöhe oder des Strömungswiderstands der Abgabevorrichtung 6 verursacht werden.

Auch ist es vorteilhaft, wenn der gesamte Strömungswiderstand so gewählt wird, dass der Druckabfall über den gesamten Strömungswiderstand wesentlich grösser ist als Druckänderungen am Eingang der Rotationspumpe 1, die beispielsweise durch einen geänderten Füllstand des Vorratsbehälters 2 verursacht werden können.

Bei der Anordnung gemäss Fig. 4 ist der Lastwiderstand im wesentlichen durch die Düse 61 bestimmt.

Die Massnahmme, die Strömungsverbindung 4 und die Abgabevorrichtung 6 als einen grossen Strömungswiderstand auszugestalten, der im Mittel wesentlich grösser ist als seine Schwankungen, hat den Vorteil, dass der Fluss bzw. der Volumenstrom des geförderten Fluids unabhängig ist von Änderungen des Lastwiderstands (solange die Änderung des Lastwiderstand sehr viel kleiner bleibt als der mittlere gesamte Strömungswiderstand). Es können also am hydraulischen Lastwiderstand Variationen auftreten, ohne dass sich dadurch der konstante Volumenstrom des Fluids 5 ändert.

Vorteilhafterweise ist der Strömungswiderstand der Strömungsverbindung 4 veränderbar. So kann er an das zu fördernde Fluid 5 angepast werden. Ferner kann durch eine Veränderung des Strömungswiderstands der Strömungsverbindung 4 gewährleistet werden, dass der gesamte Strömungswiderstand von Strömungsverbindung 4 und Abgabevorrichtung 6 im Mittel deutlich grösser ist als seine Schwankungen bzw. dass der Druckabfall über den gesamten Strömungswiderstand wesentlich grösser ist als Druckschwankungen an der Abgabevorrichtung 6.

Eine Massnahme zur Veränderung des Strömungswiderstands der Strömungsverbindung 4 ist in Fig. 4 angedeutet. In der Strömungsverbindung 4 können eine oder mehrere Schleifen 41 vorgesehen werden.

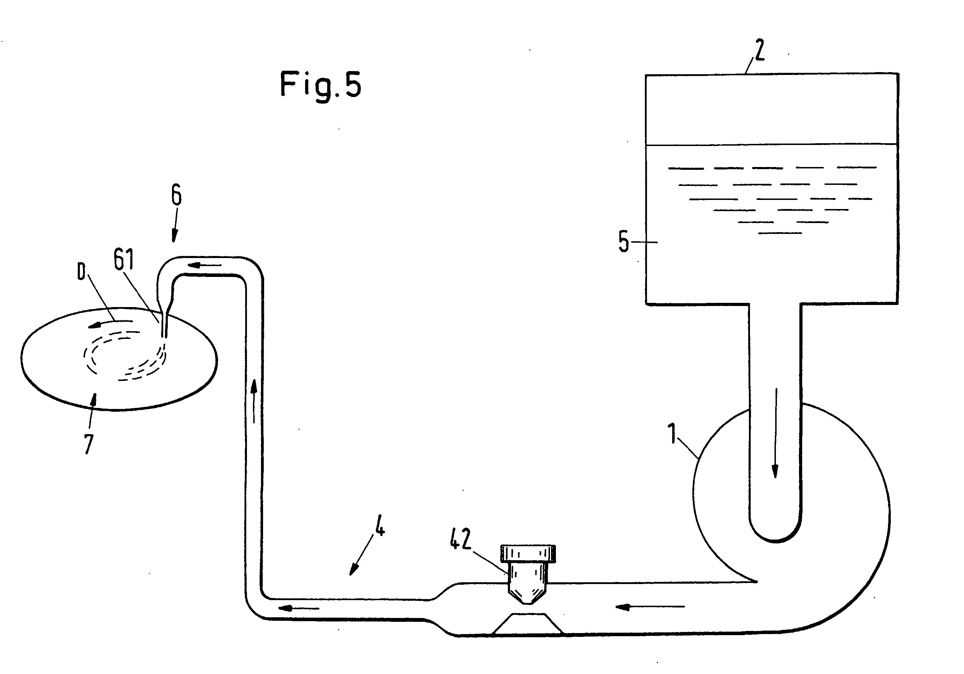

Eine weitere Möglichkeit zur Veränderung des Strömungswiderstands der Strömungsverbindung 4 ist in Fig. 5 dargestellt. Hier weist die Strömungsverbindung 4 ein einstellbares Ventil 42 auf, mit welchem der freie Strömungsquerschnitt und damit der Strömungswiderstand veränderbar ist.

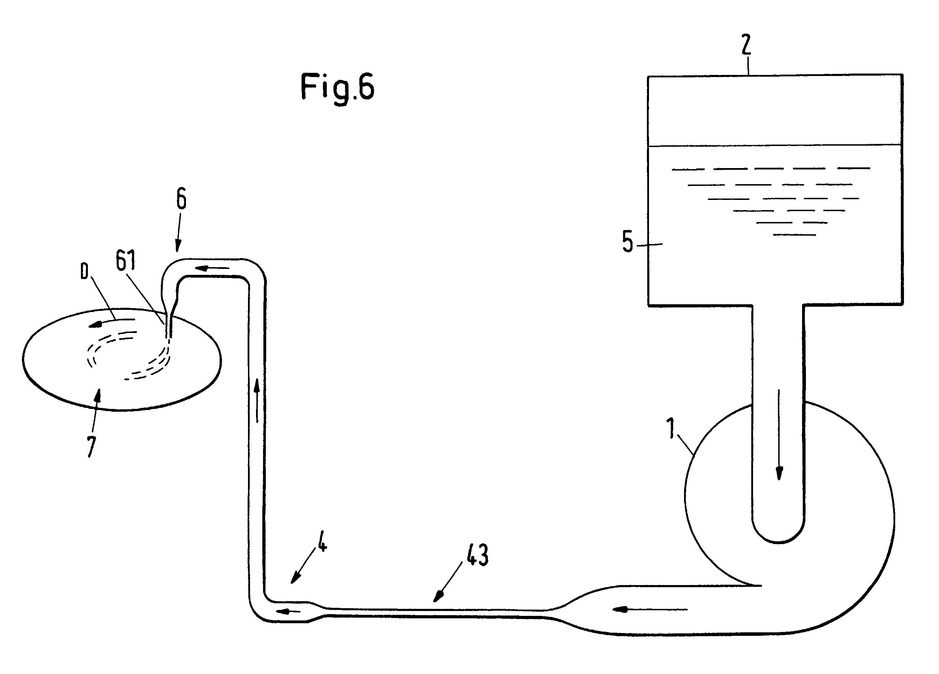

Natürlich ist es auch möglich wie in Fig. 6 gezeigt, den Strömungswiderstand der Strömungsverbindung 4 durch eine Drosselleitung 43 zu verändern. Der Strömungswiderstand lässt sich dabei durch die Länge und/oder den Querschnitt der Drosselleitung 43 einstellen.

Für viele Anwendungen, beispielsweise das Aufbringen von Fotolack auf einen Halbleiter, ist es wünschenswert, dass eine vorbestimmte Menge an Fluid gefördert wird. Auch dies ist mit dem erfindungsgemässen Verfahren realisierbar. Da erfindungsgemäss ein einstellbarer, im wesentlichen konstanter Volumenstrom mit der Rotationspumpe 1 gefördert wird, kann durch Verwendung eines Ein/Aus-Ventils, das beispielsweise zeitgesteuert ist, eine vorgegebene Fluidmenge dosiert werden.

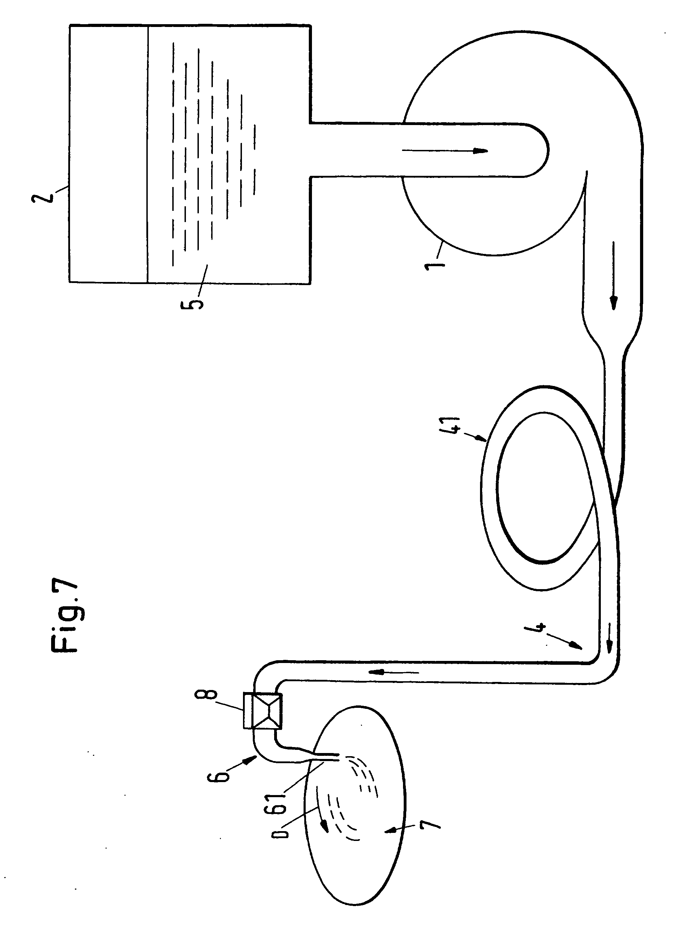

Dazu ist wie in Fig. 7 gezeigt in der Strömungsverbindung 4 oder an der Abgabevorrichtung 6 ein Ein/Aus-Ventil 8 oder eine sonstige Absperrvorrichtung vorgesehen, welche die Strömungsverbindung 4 zur Abgabevorrichtung 6 öffnet oder verschliesst. Da die Rotationspumpe 1 einen zeitlich konstanten Volumenstrom fördert, kann über eine Zeitsteuerung des Ein/Aus-Ventils 8 die Menge des auf den Wafer aufgebrachten Fluids genau dosiert werden. Ein besonderer Vorteil der Rotationspumpe 1 ist es dabei, dass die Rotationspumpe 1 im Unterschied zu vielen bekannten volumetrischen Pumpen auch dann weiterlaufen kann, wenn das Ein/Aus-Ventil 8 die Strömungsverbindung 4 verschliesst. Für die Rotationspumpe 1 stellt es kein Problem dar, gegen einen geschlossenen Ausgang zu arbeiten. Natürlich kann das Ein/Aus-Ventil auch als regelbares Ventil bzw. als Regelventil ausgestaltet sein.

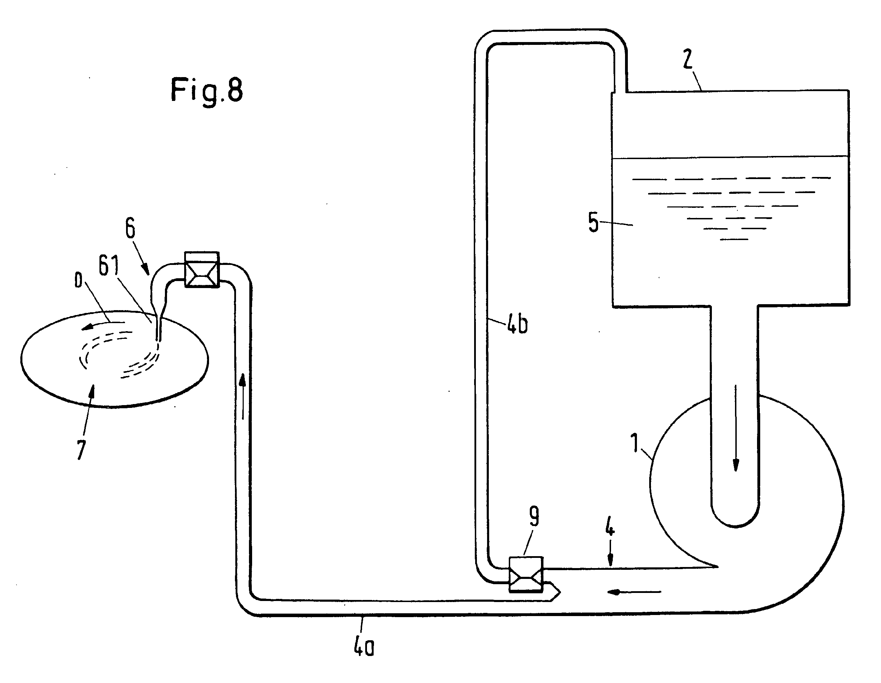

Eine weitere vorteilhafte Massnahme lässt sich mit der in Fig. 8 gezeigten Anordnung realisieren. Bei dieser Anordnung gabelt sich die Strömungsverbindung 4 stromabwärts der Rotationspumpe 1 in zwei Äste 4a und 4b auf. Der Zweig 4a führt analog wie vorangehend beschrieben über das Ein/aus-Ventil 8 zur Abgabevorrichtung 6. Der zweite Ast 4b führt zurück in den Vorratsbehälter 2. Im zweiten Ast ist ein weiteres Ventil 9 vorgesehen, welches den Ast 4b öffnen und verschliessen kann. Ist das Ventil 9 geöffnet, so wird das Fluid 5 zumindest teilweise in den Vorratsbehälter 2 rezirkuliert.

Diese Massnahme ist insbesondere für solche Fluide vorteilhaft, die zu Verklumpungen, Phasenseparationen, Ausscheidungen oder Absetzen von Partikeln neigen, beispielsweise für Suspensionen, speziell Slurry Lösungen. Durch die Rezirkulation bleibt auch das im Vorratsbehälter befindliche Fluid 5 in Bewegung, sodass eine stetige Durchmischung erfolgt.

Das Ventil 9 kann beispielsweise ständig geöffnet oder teilweise geöffnet sein, sodass ständig Fluid 5 durch den Ast 4b rezirkuliert wird. Es ist z. B. aber auch möglich, das Ventil 9 nur dann zu öffnen, wenn das Ein/aus-Ventil 8 geschlossen ist und umgekehrt. Natürlich kann das Ventil 9 auch unkorreliert mit dem Ein/Aus-Ventil 8 geöffnet und geschlossen werden.

Durch die Erfindung wird also ein Verfahren vorgeschlagen, bei welchem mit einer Rotationspumpe 1, beispielsweise einer Zentrifugalpumpe, ein einstellbarer, im wesentlichen konstanter Volumenstrom eines zu fördernden Fluids erzeugt wird. Dazu ist es nicht notwendig, den Durchfluss der Rotationspumpe mit Hilfe entsprechender Sensoren zu regeln, sondern der gewünschte Volumenstrom wird direkt durch eine Steuerung der Drehzahl (also ohne zusätzliche Regelung) eingestellt.

Natürlich ist das erfindungsgemässe Verfahren nicht auf die hier beschriebene Anwendung, nämlich der Förderung einer Slurry-Suspension bzw. CMP-Prozesse beschränkt. Es eignet sich unter anderem auch allgemein für das Fördern von Suspensionen, Emulsionen, Farben, Lebensmitteln (z. B. Säfte oder Konzentrate) oder beispielsweise zum Beschichten von Folien und Bändern.

Erfindungsgemäss wird ferner eine Pumpvorrichtung zum Erzeugen eines einstellbaren, im wesentlichen konstanten Volumenstroms von Slurry in einem chemisch-mechanischen Polierprozess (CMP) oder zum Erzeugen eines einstellbaren, im wesentlichen konstanten Volumenstroms eines Beschichtungsfluids, beispielsweise Fotolack vorgeschlagen, welche Pumpvorrichtung dadurch gekennzeichnet ist, dass sie als Rotationspumpe (1) ausgestaltet ist.

## Patentansprüche

1. Verfahren zum Erzeugen eines einstellbaren, im wesentlichen konstanten Volumenstroms eines Fluids mittels einer Pumpvorrichtung, bei welchem das Fluid (5) von der Pumpvorrichtung (1) aus einem Vorratsbehälter (2) in eine Stömungsverbindung (4) gefördert wird, **dadurch gekennzeichnet, dass** als Pumpvorrichtung eine Rotationspumpe (1) als Dosierpumpe verwendet wird, und die Rotationspumpe (1) mit einem Wirkungsgrad betrieben wird, der kleiner ist als die Hälfte des maximalen Wirkungsgrads (ηₘₐₓ) der Rotationspumpe (1), wobei der Volumenstrom nur durch die Drehzahl der Rotationspumpe (1) eingestellt wird.

2. Verfahren nach Anspruch 1, bei welchem die Rotationspumpe (1) mit höchstens zwanzig Prozent ihres maximalen Wirkungsgrads (ηₘₐₓ) betrieben wird.

3. Verfahren nach einem der vorangehenden Ansprüche, bei welchem das Fluid (5) durch die Strömungsverbindung (4) zu einer Abgabevorrichtung (6) gefördert wird, wobei der gesamte Strömungswiderstand der Strömungsverbindung (4) und der Abgabevorrichtung (6) so gewählt wird, dass sein mittlerer Wert wesentlich grösser ist als die Schwankungen während des Betriebs.

4. Verfahren nach einem der vorangehenden Ansprüche, bei welchem das Fluid (5) durch die Strömungsverbindung (4) zu einer Abgabevorrichtung (6) gefördert wird, wobei der gesamte Strömungswiderstand der Strömungsverbindung (4) und der Abgabevorrichtung (6) so gewählt wird, dass der Druckabfall über den gesamten Strömungswiderstand wesentlich grösser ist als Druckschwankungen an der Abgabevorrichtung.

5. Verfahren nach einem der vorangehenden Ansprüche, bei welchem das Fluid (5) durch die Strömungsverbindung (4) zu einer Abgabevorrichtung (6) gefördert wird, wobei der gesamte Strömungswiderstand der Strömungsverbindung (4) und der Abgabevorrichtung (6) so gewählt wird, dass der Druckabfall über den gesamten Strömungswiderstand wesentlich grösser ist als Druckänderungen am Eingang der Rotationspumpe.

6. Verfahren nach einem der vorangehenden Ansprüche, bei welchem der Strömungswiderstand der Strömungsverbindung (4) veränderbar ist und an das zu fördernde Fluid (5) angepasst wird.

7. Verfahren nach einem der vorangehenden Ansprüche, wobei in der Strömungsverbindung (4) oder an der Abgabevorrichtung (6) ein Ein/Aus-Ventil (8) vorgesehen wird.

8. Verfahren nach einem der vorangehenden Ansprüche, bei welchem das Fluid (5) zumindest teilweise in den Vorratsbehälter (2) rezirkuliert wird.

9. Verfahren nach einem der vorangehenden Ansprüche, bei welchem die Rotationspumpe (1) einen Integralrotor (10) aufweist und als lagerloser Motor ausgestaltet ist.

10. Verwendung eines Verfahrens gemäss einem der vorangehenden Ansprüche zum Fördern von Suspensionen, insbesondere zum Fördern von Slurry, speziell in einem CMP-Prozess.

11. Verwendung eines Verfahrens gemäss einem der vorangehenden Ansprüche zum Bestimmen der Viskosität eines Fluids.

## Claims

1. A method for the generation of an adjustable, substantially constant volume flow of a fluid by means of a pump apparatus in which the fluid (5) is forwarded by the pump apparatus (1) from a reservoir (2) into a flow connection (4), **characterised in that** a rotary pump (1) as the metering pump is used as the pump apparatus and the rotary pump (1) is operated at an efficiency which is less than half the maximum efficiency (ηₘₐₓ) of the rotary pump (1), with the volume flow only being set by the speed of rotation of the rotary pump (1).

2. A method in accordance with claim 1, wherein the rotary pump (1) is operated at at most twenty percent of its maximum efficiency ).

3. A method in accordance with one of the preceding claims, wherein the fluid (5) is forwarded through the flow connection (4) to a dispensing apparatus (6), with the total flow resistance of the flow connection (4) and of the dispensing apparatus (6) being selected such that its mean value is substantially larger than the fluctuations during operation.

4. A method in accordance with any one of the preceding claims, wherein the fluid (5) is forwarded through the flow connection (4) to a dispensing apparatus (6), with the total flow resistance of the flow connection (4) and of the dispensing apparatus-(6) being selected such that the pressure drop over the total flow resistance is substantially larger than the pressure fluctuations at the dispensing apparatus.

5. A method in accordance with any one of the preceding claims, wherein the fluid (5) is forwarded through the flow connection (4) to a dispensing apparatus (6), with the total flow resistance of the flow connection (4) and of the dispensing apparatus (6) being selected such that the pressure drop over the total flow resistance is substantially larger than pressure changes at the inlet of the rotary pump.

6. A method in accordance with any one of the preceding claims, wherein the flow resistance of the flow connection (4) can be changed and is matched to the fluid (5) to be forwarded.

7. A method in accordance with any one of the preceding claims, wherein an ON/OFF valve (8) is provided in the flow connection (4) or at the dispensing apparatus (6).

8. A method in accordance with any one of the preceding claims, wherein the fluid (5) is at least partly recirculated into the reservoir (2).

9. A method in accordance with any one of the preceding claims, wherein the rotary pump (1) has an integral rotor (10) and is designed as a bearing-free motor.

10. Use of a method in accordance with any one of the preceding claims for the transportation of suspensions, in particular for the transportation of slurry, especially in a CMP process.

11. Use of a method in accordance with any one of the preceding claims for the determination of the viscosity of a fluid.

## Revendications

1. Procédé de production d'un flux volumique sensiblement constant d'un fluide au moyen d'un dispositif de pompage, dans lequel le fluide (5) est convoyé par le dispositif de pompage (1) d'un réservoir de stockage (2) dans une liaison d'écoulement (4), **caractérisé en ce que** comme dispositif de pompage, une pompe de rotation (1) est utilisée comme pompe de dosage, et la pompe de rotation (1) est amenée à fonctionner avec un rendement qui est plus petit que la moitié du rendement maximal (ηₘₐₓ) de la pompe de rotation (1), le flux volumique étant réglé uniquement par le nombre de tours de la pompe de rotation (1).

2. Procédé selon la revendication 1, dans lequel la pompe de rotation (1) est amenée à fonctionner avec au maximum vingt pour cent de son rendement maximal (η_{max).}

3. Procédé selon l'une des revendications précédentes, dans lequel le fluide (5) est convoyé par la liaison d'écoulement (4) à un dispositif d'émission (6), où la résistance totale à l'écoulement de la liaison d'écoulement (4) et du dispositif d'émission (6) est sélectionnée de façon que sa valeur moyenne soit sensiblement plus grande que les oscillations pendant le fonctionnement.

4. Procédé selon l'une des revendications précédentes, dans lequel le fluide (5) est convoyé par la liaison d'écoulement (4) à un dispositif d'émission (6), où l'ensemble de la résistance à l'écoulement de la liaison d'écoulement (4) et du dispositif d'émission (6) est sélectionné de façon que la chute de pression sur toute la résistance à l'écoulement est sensiblement plus grande que les oscillations de pression au dispositif d'émission.

5. Procédé selon l'une des revendications précédentes, dans lequel le fluide (5) est convoyé par la liaison d'écoulement (4) à un dispositif d'émission (6), où l'ensemble de la résistance d'écoulement de la liaison d'écoulement (4) et du dispositif d'émission (6) est sélectionné de façon que la chute de pression sur toute la résistance à l'écoulement soit sensiblement plus grande que les modifications de pression à l'entrée de la pompe de rotation.

6. Procédé selon l'une des revendications précédentes, dans lequel la résistance à l'écoulement de la liaison d'écoulement (4) peut être modifiée et est adaptée au fluide (5) à convoyer.

7. Procédé selon l'une des revendications précédentes, dans lequel dans la liaison d'écoulement (4) ou au dispositif d'émission (6), une vanne d'admission/d'échappement (8) est prévue.

8. Procédé selon l'une des revendications précédentes, dans lequel le fluide (5) est recyclé au moins partiellement dans le réservoir de stockage (2).

9. Procédé selon l'une des revendications précédentes, dans lequel la pompe de rotation (1) présente un rotor intégral (10) et est réalisée comme moteur sans palier.

10. Utilisation d'un procédé selon l'une des revendications précédentes, pour le convoyage de suspensions, en particulier pour le convoyage de boues, spécialement dans un processus CMP.

11. Utilisation d'un procédé selon l'une des revendications précédentes pour la détermination de la viscosité d'un fluide.
